# EUROPEAN PATENT SPECIFICATION

(11) **EP 0 676 454 B1**
(45) Date of publication and mention of the grant of the patent: **27.10.1999**
(21) Application number: 95302407.2
(22) Date of filing: 11.04.1995
(51) Int. Cl.: C09D 11/00

(54) **Hot melt ink utilizable for ink jet printer**
Heissschmelzbare Tinte für Tintenstrahldrucker
Encre thermofusible pour imprimantes à jet d'encre

(30) Priority: 11.04.1994 JP 7185894
(43) Date of publication of application: 11.10.1995
(73) Proprietor: BROTHER KOGYO KABUSHIKI KAISHA, Nagoya-shi, Aichi-ken 467 (JP)
(72) Inventor: Fujioka, Masaya, Mizuho-ku, Nagoyo, Aichi 467 (JP)
(74) Representative: Woods, Geoffrey Corlett

(56) References cited:
- EP-A- 0 099 682
- EP-A- 0 181 198
- US-A- 4 390 369
- US-A- 5 041 161

## Description

The present invention relates to a hot melt ink utilizable for an ink jet printer, in particular to a hot melt ink which exists in a solid state at room temperature (ordinary temperature) and is used in an ink jet printer after being thermally melted over room temperature when printing is conducted by the ink jet printer.

In general, an ink jet printer has various advantages in printing because of it being noiseless, and its high speed print, high quality printing and ability to color printing. On the other hand, since an ink jet printer prints by directly adhering onto a print sheet ink droplets jetted from nozzles, the printing quality or drying time of the ink droplets is influenced by the quality of the print sheet. As a result, there is a problem that printing quality of an ink jet printer goes down remarkably when printing is conducted onto a print sheet of low quality.

In order to solve the above problem, an ink jet printer has been proposed which can print images with ink dots having uniform diameter onto a print sheet in spite of the quality of the print sheet, by using a hot melt type ink which has a melting point higher than room temperature. As ink components of the hot melt ink, it is known to use an ink including a natural wax as disclosed in U.S.P. 4,390,369, an ink including stearic acid as disclosed in U.S.P. 4,758,276, and an ink which includes an acid or alcohol of 20-24 carbon atoms, an acid or alcohol of 14-19 carbon atoms, a ketone having a relatively high melting point and a dye as colorant, as disclosed in U.S.P. 4,659,383. Further, in U.S.P. 4,659,383 discloses a hot melt ink in which a solid pigment is dispersed in wax having a melting point higher than 65°C, or fatty acid or alcohol of 18-24 carbon atoms.

Japanese Patent Application Laid Open No. Hei 5-125,316, discloses hot melt ink components which include a natural wax having a penetration grade less than 2, the penetration grade being measured by a penetration testing apparatus and based on the depth that a needle penetrates under a predetermined condition according to Japanese Industrial Standard (JIS) K2207, K2220, K2235, a dye dissolving agent with a melting point higher than 80°C and a dye. Utilizing such a hot melt ink can prevent inferiority of printing quality due to blurring when the ink is re-melted during ink fixation by heat or pressure, or due to offset when the ink is adhered to a pressure roller.

However, the above mentioned hot melt ink cannot be sufficiently soaked into a print sheet. The fixation property of the ink is therefore not enough. On the contrary, conventional hot melt ink tends to soak into the print sheet too easily. As a result, the ink penetrates to the rear surface of the print sheet. Further, among conventional hot melt inks there are inks which solidify while not spreading sufficiently on the printing surface of the print sheet after ink droplets reach the printing surface. In such case sufficient printing density (quality) cannot be obtained since gaps between ink dots stand out and surfaces of the ink dots are hemispherical rather than flat. On the other hand, if the hot melt ink tends to soak into the print sheet too easily, there is a problem that printing density on the printing surface is low.

EP-A-099682 discloses a non-aqueous ink jet ink composition suitable for being discharged from an ink jet apparatus at a temperature above ambient. The ink comprises stearic acid and is stated to have a viscosity of up to 35 cp at a temperature of from 40 to 90°C.

USP 5,041,161 discloses an ink jet ink which is semi-solid at room temperature. The inks comprise vehicles, such as glyceryl esters, polyoxyethylene esters, waxes, fatty acids, and mixtures thereof, which are semi-solid at temperatures between 20°C and 45°C. The ink is impulse jetted at an elevated temperature in the range of above 45°C to about 110°C, at which temperature the ink has a viscosity of about 10-15 cp.

Japanese Patent Application Laid Open No. Hei 5-125,316, mentioned above, describes improving both fixation and printing density by fixing the ink dots using heat or a pressure roller. However, though the fixation property and the printing density of an ink which cannot be sufficiently soaked into the print sheet will be improved to some extent by using the above methods, a fixing device such as a heater or a pressure roller has to be additionally installed in the ink jet printer. This necessarily increases the cost of the ink jet printer. Further, it is not possible to improve the fixation property or the printing density of an ink which is soaked into a print sheet too easily.

It is an object of the present invention to overcome the above mentioned problems and to provide a hot melt ink utilizable for an ink jet printer, the hot melt ink having good soaking property, spreading property and smoothness on a print sheet, thereby allowing images to be printed on the print sheet with sufficient fixation property and printing density without fixing using a heater or pressure roller.

Accordingly, the present invention provides hot melt ink comprising:
a vehicle which is solid at room temperature and becomes liquid when heated beyond its melting point; and
a colorant;
wherein the ink has a heat of melting of from 100 to 200 mJ/mg, a softening point of from 50 to 70°C and a viscosity of from 0.01 to 0.03 Nsm⁻² (10 to 30 cp) at a temperature of from 125 to 150°C. The hot melt ink is suitable for an ink-jet printer. The ink may be jetted at a temperature of from 125 to 150°C.

In the above hot melt ink, the vehicle acts as a medium in which the colorant is dissolved or dispersed. Here, the vehicle exists in a solid state at room temperature and becomes a liquid over the melting point thereof by being melted through heat energy. At that time, the melted ink has a viscosity suitable for jetting from nozzles of an ink jet printer and such melted ink is able to exist with heat stability at the jetting temperature. The vehicle may be composed of one component alone, or mixture of two or more components. Further, the vehicle may include a component which is liquid at normal temperature so long as it retains the above properties.

The colorant in the hot melt ink exists in a dissolved state or a dispersed state in the vehicle. The colorant acts to give a property as an ink by coloring the vehicle. The colorant may be selected from pigment or dye, preferably organic pigment, inorganic pigment, oil-soluble dye or organic solvent soluble dye.

The colorant can raise the heat of melting and softening point of the ink, as factors which influence the fixation property of the ink, the penetration of the ink into a print sheet and the spreading property of the ink on the print sheet.

As shown in Fig.1, it is generally known that the heat of melting is indicated as an area (oblique lines are added) in a thermogram (DSC curve) which is measured using a Differential Scanning Calorimeter (abbreviated DSC hereinafter). The heat of melting of the ink is defined as the quantity of heat absorbed when the ink is melted. Further, the softening point, as shown in Fig. 2, is the temperature from which heat absorption commences in the DSC curve and the ink starts to be softened from the softening point. Further, the melting point, as shown in Fig.3, is indicated as a temperature corresponding to the lowermost peak in the DSC curve. At the melting point, endothermic energy reaches a maximum value.

When an ink droplet reaches the print sheet, the exothermic energy emitted from the solidifying droplet is high if the heat of melting of the ink is high. Therefore, solidification of the ink is delayed. In this case, an ink dot is formed with a flat shape on its top, the ink penetrates remarkably into the print sheet and spreads widely on the print sheet. On the other hand, if the heat of melting of the ink is low, the ink solidifies quickly. In this case, the ink dot has a hemispherical shape on its top, only slightly penetrates into the print sheet and spreads not so widely.

Further, if the softening point of the ink is low, when the ink droplet reaches the print sheet it takes a comparatively long time until the ink solidifies. In this case, the ink dot has a flat shape on its top, penetrates remarkably into the print sheet and spreads widely on the print sheet. If the softening point is high, the ink solidifies quickly, and the ink dot has a hemispherical shape on its top, only slightly penetrates into the print sheet and spreads not so widely.

If the viscosity of the ink is low, when it reaches the print sheet, the ink droplet tends to penetrate into the print sheet easily and to spread easily on the print sheet since the fluidity of the ink is high because of its low viscosity. If the viscosity of the ink is high, it is hard for the ink droplet to penetrate the print sheet and to spread thereon because the fluidity of the ink is poor.

Thus, if the heat of melting of the ink is high, the softening point is low and the viscosity is low, the ink is extremely hard to solidify. If the heat of melting of the ink is low, the softening point is high and the viscosity is high, the ink tends to be solidified easily.

Taking into consideration the above properties, the ink of the present invention has a heat of melting of from 100 ∼ 200 mJ/mg, a softening point of from 50 ∼ 70°C and a viscosity of from 10 ∼ 30 cp at a temperature of from 125 to 150°C at which the ink is jetted.

Based on the heating of melting, softening point and viscosity identified above, the penetration property into the print sheet, the spreading property on the print sheet and the flatness property of the ink of the present invention make it suitable for ink jet printing. As a result, the fixation property of the ink on the print sheet can be improved, thereby obtaining high printing density since spaces between ink dots almost disappear. Therefore, the hot melt ink of the present invention satisfies all elementary properties necessary for the ink to be used in an ink jet printer. By using the hot melt ink in an ink jet printer, images can be printed on a print sheet with sufficient fixation property and high printing density without fixing using a heater or pressure roller. Further, images with good transparency can be printed on OHP (Over Head Projector) film.

If the heat of melting of the ink exceeds 200 mJ/mg, or the softening point is lower than 50°C, or the viscosity is lower than 10 cp, problems occur in that the ink tends to penetrate to the rear surface of the print sheet and blurring of the ink results. If the heat of melting is lower than 100 mJ/mg, or the softening point is higher than 70 °C, or the viscosity is higher than 30 cp, the fixation property of the ink is remarkably poor and the printing density is insufficient.

The invention will be described with reference to the following drawings, wherein:

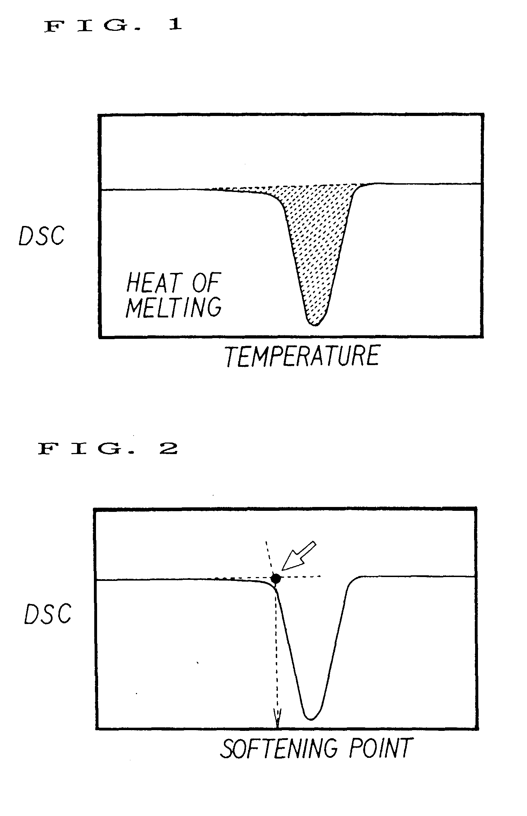

Fig. 1 is a graph for explaining heat of melting measured using a Differential Scanning Calorimeter (DSC);
Fig. 2 is a graph for explaining softening point measured using a DSC;

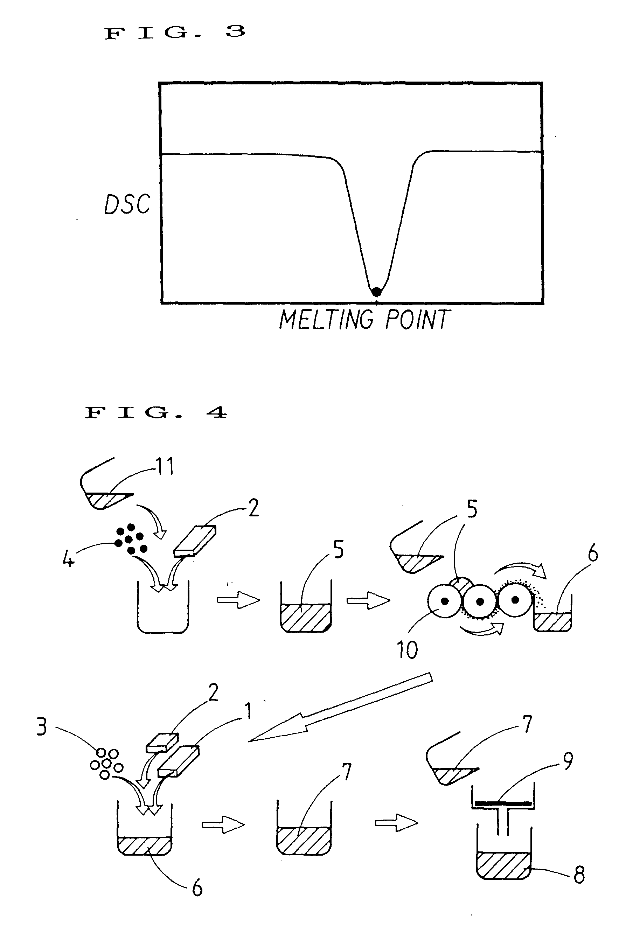

Fig. 3 is a graph for explaining melting point measured using a DSC; and
Fig. 4 is a schematic view illustrating a process for producing the hot melt ink according to an embodiment of the present invention.

It is desirable that the melting point of the vehicle is more than 50°C. As the vehicle, various materials can be used. For instance, it is preferable to add in the vehicle a solid wax or resin which retains a solid state at room temperature as one component of the vehicle.

The solid wax may be selected from petroleum waxes such as paraffin wax or microcrystalline wax; mineral waxes such as montan wax, ozokerite or ceresin; waxes of plant origin such as candellila wax, carnauba wax, rice wax or hohoba solid wax; waxes of animal origin such as bee wax, lanolin wax or whale wax; synthesized hydrocarbons such as Fischer-Tropsch wax or polyethylene wax; hydrogenated waxes such as hardened castor oil or hardened castor oil derivatives; denatured waxes such as montan wax derivatives or paraffin wax derivatives, microcrystalline wax derivatives or polyethylene wax derivatives; higher fatty acids such as behenic acid, stearic acid, palmitic acid, myristic acid or lauric acid; higher alcohols such as stearyl alcohol or behenyl alcohol; hydroxystearic acids such as 1,2-hydroxy stearic acid or 1,2-hydroxy stearic acid derivatives; ketones such as stearone or laurone; fatty acid amides such as lauric amide, stearic amide, oleic amide, eruca amide, ricinoleic amide, 1,2-hydroxy stearic amide, special fatty amide or N-substituted fatty acid amide; amines such as dodecyl amine, tetradecyl amine or octadecyl amine; esters such as methyl stearate, octadecyl stearate, glycerine fatty acid ester, sorbitan fatty acid ester, propylene glycol fatty acid ester, ethylene glycol fatty acid ester or polyoxyethylene fatty acid ester; polymer waxes such as α-olefin maleic acid anhydride copolymer wax. The solid wax may be used alone or as a mixture of two or more of them.

Among the waxes mentioned above, if a wax with low polarity is used, for example, paraffin wax, microcrystalline wax, ozokerite, ceresin, polyethylene wax, Fischer-Tropsch wax, stearone, laurone, methyl stearate or octadecyl stearate, it is desirable that the wax with low polarity is used in a mixture with another wax having relatively high polarity. The dispersibility and solubility of the pigment or the dye as the colorant is thereby remarkably improved.

A resin may be used as one component of the vehicle. The resin may be selected from olefinic resins such as polyethylene resin or polypropylene resin; vinylic resins such as ethylene-vinyl acetate copolymer resin, vinyl chloride-vinyl acetate copolymer resin, vinyl acetate resin or ethylene-vinyl chloride-vinyl acetate copolymer resin; acrylic resins such as methacrylate resin, polyacrylate resin, ethylene-ethyl acrylate copolymer resin or ethylene-methacrylic acid copolymer resin; phenolic resins; polyurethane resins; polyamide resins; polyester resins; ketone resins; alkyd resins; rosin type resins; petroleum resins; maleic acid resins; and butyral resins. The above resin may be used alone or as a mixture of two or more of them.

The vehicle may utilize one of the above solid waxes or the above resins alone, or may be obtained by mixing the above wax and resin. In a preferred embodiment the vehicle comprises a wax which is solid at room temperature and further comprises a resin. Preferably, it is better that wax is used as a main component of the vehicle and resin is used as an additive component thereof. For instance, it is preferable that the wax is included in an amount of 30 ∼ 99.9% by weight in the hot melt ink. Further, it is preferable that the resin is included in an amount of 0 ∼ 50% by weight in the hot melt ink.

To the above vehicle, agents may be added such as agents for giving adhesive property and agents for obtaining the melting point. Further additive agents may be used such as surface tension agents, antioxidant agents, or ultraviolet absorbent agents. In this case, it may be preferable that total quantity of the above agents is 0 ∼ 49% by weight in the entire hot melt ink. Further, it may be preferable that the quantity of the vehicle lies in a range of 50 ∼ 99.9% by weight in the entire hot melt ink.

The pigment or dye as colorant has a property for coloring the hot melt ink and exists in the vehicle in a finely dispersed state or a dissolved state.

Here, as the pigment, either organic pigment or inorganic pigment may be used, in particular, pigment which is dispersible in the components of the hot melt ink can be used. Especially, as pigment with good dispersibility, it is preferred to use a pigment selected from inorganic pigment such as carbon black; organic pigment such as quinacridone pigment, phthalocyanine pigment and isoindolinone pigment. The above pigment can be used alone or as a mixture of two or more pigments. Further, a dye for preparing the color can be added in the pigment.

As the dye, either oil-soluble dyes or dyes soluble in organic solvent may be used, in particular, dye which is soluble in the components of the hot melt ink.

It is preferred that the colorant, such as the pigment or the dye mentioned above, is present in an amount of from 0.1 ∼ 10% by weight of the entire hot melt ink by taking the printing density into consideration. More preferably, the pigment or dye is present in an amount of from 0.5 ∼ 8% by weight, more preferably of from 0.5 ∼ 6% by weight.

The hot melt ink according to an embodiment can be prepared as follows.

First, the vehicle including wax and resin is melted by heating, thereby obtaining a mixture. While retaining the mixture in a melted liquid state, a pigment or dye is added and stirred into the mixture. If necessary, the pigment or dye may be finely smashed by a dispersing device such as a roll mill having three rolls, ball mill or colloid mill, before being added into the mixture of the vehicle. The composition is mixed under stirring and is filtered by using a mesh filter less than 10 µm while in the melted (liquid) state. A hot melt ink is thereby obtained.

The following examples illustrate the present invention,

### EXAMPLE 1

In this example the vehicle was composed of paraffin wax (HNP-10, manufactured by NIPPON SEIRO CO., LTD.), paraffin wax derivatives (HAD4080, manufactured by NIPPON SEIRO CO., LTD.) and petroleum resin (NEOPOLYMER-S, NIPPON PETROCHEMICALS CO., LTD.). The colorant pigment was carbon black (MA-100, MITSUBISHI CHEMICAL CO., LTD.). In order to efficiently disperse the pigment in the vehicle, an aluminium coupling agent such as acetalkoxy aluminium di-isopropylate (PLAIN ACT AL-M, AJINOMOTO CO., INC.) was additionally added, the aluminium coupling agent stabilizing refinement and dispersion of the pigment by chemically coupling to the pigment surface.

The composition of the ink was as follows.

| | |
|---|---|
| HNP-10 (paraffin wax) | 73 WT% |
| HAD 5080 (paraffin wax derivatives) | 19.8 WT% |
| NEOPOLYMER (petroleum resin) | 5 WT% |
| MA-100 (carbon black) | 2 WT% |
| PLAIN ACT AL-M (acetalkoxy aluminium di-isopropylate) | 0.2 WT% |

The ink was prepared according to the procedure shown in Fig. 4.

In Fig. 4, first, the paraffin wax 2 (56 weight parts), the carbon black 4 (40 weight parts) and the acetalkoxy aluminium di-isopropylate 11 (4 weight parts) were mixed with each other under heating at 100°C, thereby obtaining a mixture 5. The mixture 5 was passed three times through a SIBON ROLLER 10 manufactured by INOUE MFG, INC., which is a roll mill with three rolls whose roll temperature may be controlled, under heating at 80°C.

The thus obtained mixture 6 after passing through the roll mill was melted by heating at 120°C. Thereafter the paraffin wax 1 (73 weight parts), the paraffin wax derivatives 2 (17 weight parts) and the petroleum resin 3 (5 weight parts) were added to the mixture 6 and further stirred to form the composition 7.

2 to 3 droplets of the thus prepared composition 7 were placed and melted on a glass slide heated to 120°C, on which a cover glass was placed and pressed slightly. Then, as a result of observation under light transmission microscope ("XF-UNR" manufactured by NIKON CORPORATION), particles were scarcely observed. Accordingly, it was confirmed that most of the carbon black pigment was substantially dispersed with fine particle diameter of less than 1 µm. It therefore was confirmed that the pigment dispersibility was very good. Further, as a result of an aging test during which the composition 7 was maintained under hermetically sealed conditions for 30 days at 125°C in a glass heat-resistant retainer, the carbon black pigment was scarcely precipitated. It was therefore confirmed that the dispersing stability of the pigment was very good.

After the composition 7 was filtered by 1 µm mesh filter in a heat-filtering device manufactured by TOYO ROSHI KAISHA LTD., a hot melt ink 8 was finally obtained.

The heat properties of the hot melt ink 8 were measured using a differential scanning calorimeter (DSC) ("SSC-220" manufactured by SEIKO INSTRUMENTS INC.). As a result of measurement, the heat of melting of the ink was 190 mJ/mg and its softening point was 64°C. Further, the viscosity of the hot melt ink 8 in a melted liquid state (viscosity measured in a melted liquid state when the ink 8 is heated over its melting point), is measured using a "DV2 +" viscometer manufactured by BROOK FIELD CO., LTD.. The viscosity of the ink 8 at 125°C was 15 cp.

The hot melt ink 8 of EXAMPLE 1 obtained as above can be used as an ink for a hot melt ink type ink jet printer. The hot melt ink 8 was loaded to an ink jet printer and jetted at an ink jetting temperature of 125°C onto a print sheet. It was found that the ink dot diameter was suitable for ink jet printing, the ink dot covering area being sufficient, and the printing density was sufficiently deep. Further, the phenomenon where the ink dot penetrates to the rear surface of the print sheet was not observed. In observing the surface of the ink dot by microscope, it was confirmed that the ink dot had a very smooth flat face on its top without being hemispherical. Further, on the basis of smooth flatness and thinness of the ink dot, it was confirmed that the ink on the print sheet could resist ink blurring on folding of the print sheet.

### EXAMPLE 2

In this example the vehicle was composed of STEARON (KAOWAX T-1, manufactured by KAO CORPORATION), stearic amide (FATTY ACID AMIDE S), manufactured by KAO CO., LTD.) and terpene resin (CLEARON K-100, manufactured by YASUHARA CHEMICAL CO., LTD.). The colorant dye was phthalocyanine oil-soluble dye (NEOPEN BLUE 808, manufactured by BASF).

The composition of the ink was as follows.

| | |
|---|---|
| KAOWAX T-1 (STEARON) | 40 WT% |
| FATTY ACID AMIDE S (stearic amide) | 14 WT% |
| CLEARON K-100 (terpene resin) | 45 WT% |
| NEOPEN BLUE 808 (phthalocyanine oil-soluble dye) | 1 WT % |

The ink was prepared as follows.

First, KAOWAX T-1 (40 weight parts), FATTY ACID AMIDE S (14 weight parts) and CLEARON K-100 (45 weight parts) were mixed with each other under heating at 130°C,. Thereafter NEOPEN BLUE 808 (1 weight part) was added to the mixture obtained and sufficiently stirred. A "DISPERMAT CV" stirrer manufactured by VMA GETZMANN CO., LTD., was used.

2 to 3 droplets of the thus prepared composition were placed and melted on a glass slide heated to 120°C, on which a cover glass was placed and pressed slightly. Then, as a result of observation under the light transmission microscope ("XF-UNR") mentioned above, particles were scarcely observed. Accordingly, it was confirmed that NEOPEN BLUE dye was almost completely dissolved in the composition.

After the composition was filtered by a 1 µm mesh filter in a heat-filtering device manufactured by TOYO ROSHI KAISHA LTD., a hot melt ink was finally obtained.

The heat properties of the hot melt ink were measured using a "SSC-220" differential scanning calorimeter (DSC). As a result of measurement, the heat of melting of the ink was 120 mJ/mg and its softening point was 60°C. Further the viscosity of the hot melt ink in a melted liquid state (viscosity measured in a melted liquid state when the ink is heated over its melting point), was measuring using a "DV2 +" viscometer. The viscosity of the ink at 135°C was 20 cp.

The hot melt ink was obtained as above can be used as an ink for a hot melt ink type ink jet printer. The hot melt ink was loaded to an ink jet printer and jetted at an ink jetting temperature of 135°C onto a print sheet. It was found that the ink dot diameter was suitable for ink jet printing, the ink dot covering area was sufficient, and the printing density was clearly deep blue. Further, the phenomenon where the ink dot penetrates to the rear surface of the print sheet was not observed. In observing the surface of the ink dot by microscope, it was confirmed that the ink dot had a very smooth flat face on its top without being hemispherical. Further, on the basis of smooth flatness and thinness of the ink dot, it was confirmed that the ink on the print sheet could resist ink blurring on folding of the print sheet. Further, when the ink was printed on an OHP (Over Head Projector) film as utilized in an OHP, clear projected images with excellent transparency could be obtained.

### COMPARATIVE EXAMPLE 1

In this example the vehicle was composed of stearic amide (FATTY ACID AMIDE S, manufactured by KAO CO., LTD.) and hydrogenated petroleum resin (ARKON P-100, manufactured by ARAKAWA CHEMICAL INDUSTRIES LTD.). The colorant dye was the blue oil-soluble dye (KAYASET BLUE 714, manufactured by NIPPON KAYAKU CO., LTD.).

The composition of the ink was as follows.

| | |
|---|---|
| FATTY ACID AMIDE S (stearic amide) | 38 WT% |
| ARKON P-100 (hydrogenated petroleum resin) | 60 WT% |
| KAYASET BLUE 714 (blue oil-soluble dye) | 2 WT% |

The ink was prepared as follows.

First, FATTY ACID AMIDE S (38 weight parts) and ARKON P-100 (60 weight parts) were mixed with each other under heating at 130°C. Thereafter KAYASET BLUE 714 (2 weight parts) was added to the mixture obtained and sufficiently stirred using a "DISPERMAT CV" stirrer (mentioned above).

2 to 3 droplets of the thus prepared composition were placed and melted on a glass slide heated to 120°C, on which a cover glass was placed and pressed slightly. Then, as a result of observation under the light transmission microscope ("XF-UNR") mentioned above, particles were scarcely observed. Accordingly, it was confirmed that the KAYASET BLUE 714 dye was almost completely dissolved in the composition.

After the composition was filtered using a 1 µm mesh filter in a heat-filtering device manufactured by TOYO ROSHI KAISHA LTD., a hot melt ink was finally obtained.

The heat properties of the hot melt ink were measured using a "SSC-220" differential scanning calorimeter (DSC). As a result of measurement, the heat of the melting of the ink was 70 mJ/mg and its softening point was 84°C.
Further, the viscosity of the hot melt ink in a melted liquid state (viscosity measured in a melted liquid state when the ink is heated over the melting point thereof), was measured using a "DV2 +" viscometer. The viscosity of the ink at 150°C was 45 cp.

The hot melt ink obtained as above was loaded to an ink jet printer and jetted at an ink jetting temperature of 150°C onto a print sheet. As a result of ink jetting, it was found that ink dot was solidified without sufficiently spreading on the print sheet since the heat of melting of the ink is low, the softening point is high and the viscosity is high. Therefore, the ink dot covering area was not sufficient, and the printing density very thin. Further, in observing the surface of the ink dot by microscope, it was confirmed that the ink dot had a hemispherical face on its top. It was confirmed that the ink on the print sheet could not resist blurring on folding of the print sheet. Further, when the ink was printed on an OHP (Over Head Projector) film as utilized in an OHP, only dark projected images with poor transparency were obtained due to light scattering occurring on the hemispherical ink dot surface.

### COMPARATIVE EXAMPLE 2

In this example the vehicle was composed of laurone (reagent), oxidized polyethylene wax (POWAX H-10, manufactured by NIPPON PETROLEUM CO., LTD.) and ethylene-vinylacetate copolymer resin (EVA210, manufactured by DUPONT-MITSUI POLYCHEMICALS CO., LTD.). The colorant pigment was red quinacridone pigment (HOSTAPERM PINK E02 TONERGRADE, manufactured by HOECHIST).

The composition of the ink was as follows.

| | |
|---|---|
| laurone | 87 WT% |
| POWAX H-10 (oxidized polyethylene wax) | 5 WT% |
| EVA210 (ethylene-vinylacetate copolymer resin) | 5 WT% |
| HOSTAPERM PINK E02 TONERGRADE (red quinacridone pigment) | 3 WT% |

The ink was prepared as follows.

First, POWAX H-10 (50 weight parts) and HOSTAPERM PINK E02 TONERGRADE (30 weight parts) were mixed with each other under heating at 100°C. Thereafter the mixture obtained was passed three times through a SIBON ROLLER mentioned above under heating at 75°C.

The thus prepared mixture (8 weight parts), after passing through the roll mill, was melted by heating at 120°C. Thereafter laurone (87 weight parts) and EVA 210 (5 weight parts) were added and stirred.

2 to 3 droplets of the composition were placed and melted on a glass slide heated to 120°C, on which a cover glass was placed and pressed slightly. Then, as a result of observation under a light transmission microscope ("XF-UNR"), particles were scarcely observed. Accordingly, it was confirmed that the HOSTAPERM PINK 302 TONERGRADE quinocridone pigment was substantially dispersed with a fine particle diameter of less than 1 µm. It was therefore confirmed that the dispersibility of the pigment was very good. Further, as a result of an aging test during which the composition was maintained under hermetically sealed conditions for 30 days at 125°C in a glass heat-resistant retainer, the pigment was scarcely precipitated. It was therefore confirmed that the dispersing stability of the pigment was very good.

After the composition was filtered using a 1 µm mesh filter in a heat-filtering device manufactured by TOYO ROSHI KAISHA LTD., a hot melt ink was finally obtained.

The heat properties of the hot melt ink were measured using a "SSC-220" differential scanning calorimeter (DSC). As a result of measurement, the heat of melting of the ink was 240 mJ/mg and its softening point was 65°C. Further, the viscosity of the hot melt ink in a melted liquid state (viscosity measured in a melted liquid state when the ink is heated over the melting point), was measured using a "DV2 +" viscometer. The viscosity of the ink at 145°C was 8 cp.

The hot melt ink obtained as above was loaded to an ink jet printer and jetted at an ink jetting temperature of 145°C onto a print sheet. As a result of ink jetting, it was found that ink dot was solidified in a spreading state on the print sheet due to the low heat of melting and low viscosity of the ink. The ink dot was blurred on the print sheet and penetrated to the rear surface of the print sheet. Further, it was confirmed that the printing density was thin since the ink penetrated into the print sheet. Further, in observing the surface of the ink dot by microscope, it was confirmed that colored fibers of the print sheet were clearly recognised since the ink dot penetrated into the print sheet.

## Claims

1. A hot melt ink which is solid at room temperature, which comprises:
a vehicle which is solid at room temperature and becomes a liquid when heated beyond its melting point; and
a colorant;
wherein the ink has a heat of melting of from 100 to 200 mJ/mg, a softening point of from 50 to 70°C and a viscosity of from 0.01 to 0.03 Nsm⁻² (10 to 30 cp) at a temperature of from 125 to 150°C.

2. A hot melt ink according to claim 1, wherein the melting point of the vehicle is more than 50°C.

3. A hot melt ink according to claim 1 or claim 2 wherein the vehicle is present in an amount of from 50% to 99.9% by weight.

4. A hot melt ink according to any one of the preceding claims present, wherein the colorant is present in an amount of from 0.1% to 10% by weight.

5. A hot melt ink according to any one of the preceding claims, wherein the colorant is present in an amount of from 0.5 to 8% by weight.

6. A hot melt ink according to any one of the preceding claims, wherein the colorant is present in an amount of from 0.5 to 6% by weight.

7. A hot melt ink according to any one of the preceding claims, wherein the vehicle comprises a wax which is solid at room temperature, the solid wax being selected from petroleum waxes, mineral waxes, waxes of plant origin, waxes of animal origin, synthesized hydrocarbons, hydrogenated waxes, denatured waxes, higher fatty acids, higher alcohols, hydroxystearic acids, ketones, fatty acid amides, amines, esters, and polymer waxes.

8. A hot melt ink according to claim 7 wherein the solid wax is selected from paraffin wax, microcrystalline wax, montan wax, ozokerite, ceresin, candellila wax, carnauba wax, rice wax, hohoba solid wax, bee wax, lanolin wax, whale wax, Fischer-Tropsch wax, polyethylene wax, hardened castor oil, hardened castor oil derivatives, montan wax derivatives, paraffin wax derivatives, microcrystalline wax derivatives, polyethylene wax derivatives, behenic acid, stearic acid, palmitic acid, myristic acid, lauric acid, stearyl alcohol, behenyl alcohol, 1,2-hydroxy stearic acid, 1,2-hydroxy stearic acid derivatives, stearone, laurone, lauric amide, stearic amide, oleic amide, eruca amide, ricinoleic amide, 1,2-hydroxy stearic amide, special fatty amide, N-substituted fatty acid amide, dodecyl amine, tetradecyl amine, octadecyl amine, methyl stearate, octadecyl stearate, glycerine fatty acid ester, sorbitan fatty acid ester, propylene glycol fatty acid ester, ethylene glycol fatty acid ester, polyoxyethylene fatty acid ester and α-olefin maleic acid anhydride copolymer wax.

9. A hot melt ink according to claim 7 or 8, wherein the vehicle further comprises one or more resins selected from olefinic resins, vinylic resins, acrylic resins, phenolic resins, polyurethane resins, polyamide resins, polyester resins, ketone resins, alkyd resins, rosin type resins, petroleum resins, maleic acid resins, and butyral resins.

10. A hot melt ink according to claim 9, wherein the resin is selected from polyethylene resin, polypropylene resin, ethylene-vinyl acetate copolymer resin, vinyl chloride-vinyl acetate copolymer resin, vinyl acetate resin, ethylene-vinyl chloride-vinyl acetate polymer resin, methacrylate resin, polyacrylate resin, ethylene-ethyl acrylate copolymer resin and ethylene-methacrylic acid copolymer resin.

11. A hot melt ink according to claim 9 or 10, wherein the solid wax is used as a main component and the resin is used as an additive component, in the vehicle.

12. A hot melt ink according to any one of claims 7 to 11, wherein the solid wax is present in an amount of from 30 to 99.9% by weight in the hot melt ink.

13. A hot melt ink according to any one of claims 9 to 12, wherein the resin is present in an amount of 50% or less by weight.

14. A hot melt ink according to any one of the preceding claims, wherein the colorant is one or more pigments selected from inorganic pigments and organic pigments.

15. A hot melt ink according to claim 14, wherein the colorant is one or more pigments selected from carbon black, quinacridone pigment, phthalocyanine pigment and isoindolinone pigment.

16. A hot melt ink according to any one of claims 1 to 13, wherein the colorant is one or more dyes selected from oil-soluble dyes and dyes soluble in organic solvent.

17. Use of a hot melt ink according to any one of the preceding claims in an ink jet printer, wherein the ink is jetted from nozzles of the ink-jet printer at a jetting temperature of from 125 to 150°C.

## Patentansprüche

1. Heißschmelztinte, welche bei Raumtemperatur fest ist, mit:
einem Bindemittel, das bei Raumtemperatur fest ist und zu einer Flüssigkeit wird, wenn es über seinen Schmelzpunkt erwärmt wird; und
einem Färbemittel;
wobei die Tinte eine Schmelzwärme von 100 bis 200 mJ/mg, einen Erweichungspunkt von 50 bis 70°C und eine Viskosität von 0,01 bis 0,03 Nsm⁻² (10 bis 30 cp) bei einer Temperatur von 125 bis 150°C hat.

2. Heißschmelztinte nach Anspruch 1, bei der der Schmelzpunkt des Bindemittels größer als 50°C ist.

3. Heißschmelztinte nach Anspruch 1 oder 2, bei der das Bindemittel in einer Menge von 50 bis 99,9 Gew.% vorhanden ist.

4. Heißschmelztinte nach einem der vorhergehenden Ansprüche, bei der das Färbemittel in einer Menge von ungefähr 0,1 bis 10 Gew.% vorhanden ist.

5. Heißschmelztinte nach einem der vorhergehenden Ansprüche, bei der das Färbemittel in einer Menge von 0,5 bis 8 Gew.% vorhanden ist.

6. Heißschmelztinte nach einem der vorhergehenden Ansprüche, bei der das Färbemittel in einer Menge von 0,5 bis 6 Gew.% vorhanden ist.

7. Heißschmelztinte gemäß einer der vorhergehenden Ansprüche, bei der das Bindemittel ein Wachs aufweist, welches bei Raumtemperatur fest ist, wobei das feste Wachs ausgewählt ist aus Erdölwachsen, mineralischen Wachsen, Wachsen pflanzlichen Ursprungs, Wachsen tierischen Ursprungs, synthetisierten Kohlenwasserstoffen, hydrierten Wachsen, denaturierten Wachsen, höheren Fettsäuren, höheren Alkoholen, Hydroxystearinsäuren, Ketonen, Fettsäureamiden, Aminen, Estern und Polymerwachsen.

8. Heißschmelztinte nach Anspruch 7, bei der das feste Wachs ausgewählt ist aus Paraffinwachs, mikrokristallinem Wachs, Montanwachs, Ozokerit, Ceresin, Kandelillawachs, Karnaubawachs, Reiswachs, Hohoba-Festwachs, Bienenwachs, Lanolinwachs, Walwachs, Fischer-Tropsch-Wachs, Polyethylenwachs, gehärtetes Kastoröl, Derivate von gehärtetem Kastoröl, Montanwachsderivate, Paraffinwachsderivate, Mikrokristallinwachsderivate, Polyethylenwachsderivate, Behensäure, Stearinsäure, Palmitinsäure, Myristinsäure, Laurinsäure, Stearylalkohol, Behenylalkohol, 1,2-Hydroxy-stearinsäure, 1,2-Hydroxy-stearinsäurederivate, Stearon, Lauron, Laurinamid, Stearinamid, Ölamid, Erucaamid, Ricinolamid, 1,2-Hydroxy-stearinamid, Spezialfettamid, N-substituiertes Fettsäureamid, Dodecylamin, Tetradecylamin, Octadecylamin, Methylstearat, Ocadecylstearat, Glycerin-Fettsäureester, Sorbitan-Fettsäureester, Propylenglykol-Fettsäureester, Ethylenglykol-Fettsäureester, Polyoxyethylen-Fettsäureester und α-Olefin-Maleinsäureanhydrid-Copolymerwachs.

9. Heißschmelztinte nach Anspruch 7 oder 8, bei der das Bindemittel ferner ein oder mehrere Harze aufweist, welche ausgewählt sind aus Olefinharzen, Vinylharzen, Acrylharzen, Phenolharzen, Polyurethanharze, Polyamidharzen, Polyesterharzen, Ketonharzen, Alkydharzen, Kolophonium-artigen Harzen, Erdölharzen, Maleinsäureharzen und Butyralharzen.

10. Heißschmelztinte nach Anspruch 9, bei der das Harz ausgewählt ist aus Polyethylenharz, Polypropylenharz, Etyhlenvinylacetat-Copolymerharz, Vinylchlorid-Vinylacetat-Copolymerharz, Vinylacetatharz, Ethylen-Vinylchlorid-Vinylacetat-Polymerharz, Methacrylat-Harz, Polyacrylatharz, Ethylen-Ethylacrylat-Copolymerharz und Ethylen-Methacrylsäure-Copolymerharz.

11. Heißschmelztinte nach Anspruch 9 oder 10, bei der das feste Wachs als eine Hauptkomponente und das Harz als eine Zusatzkomponente in dem Bindemittel benutzt ist.

12. Heißschmelztinte, nach einem der Ansprüche 7 bis 11, bei der das feste Wachs in einer Menge von 30 bis 99,9 Gew.% in der Heißschmelztinte vorhanden ist.

13. Heißschmelztinte nach einem der Ansprüche 9 bis 12, bei der Harz in einer Menge von 50 Gew. oder weniger vorhanden ist.

14. Heißschmelztinte nach einem der vorhergehenden Ansprüche, bei der das Färbemittel ein oder mehrere Pigmente ist, welche aus anorganischen Pigmenten und organischen Pigmenten ausgewählt sind.

15. Heißschmelztinte nach Anspruch 14, bei der das Färbemittel ein oder mehrere Pigmente ist, welche aus Kohleschwarz, Quinacridonpigment, Phthalocyaninpigment und Isoindolinpigment ausgewählt sind.

16. Heißschmelztinte nach einem der Ansprüche 1 bis 13, bei der das Färbemittel ein oder mehrere Farbstoffe ist, welche aus öl-löslichen Farbstoffen und in organischen Lösungsmittel löslichen Farbstoffen ausgewählt sind.

17. Verwendung einer Heißschmelztinte nach einem der vorhergehenden Ansprüche in einem Tintenstrahldrucker, bei der die Tinte von Düsen des Tintenstrahldruckers ausgespritzt wird bei einer Spritztemperatur von 125 bis 150°C.

## Revendications

1. Une encre thermofusible solide à température ambiante, qui se compose de:
un véhicule qui est solide à température ambiante et devient liquide lorsqu'il est chauffé au-delà de son point de fusion; et
d'un colorant;
dans laquelle l'encre a une température de fusion située entre 100et 200 mJ/mg, un point d'amollissement situé entre 50 et 70°C et une viscosité située entre 0,01 et 0,03 NSM⁻² ( 10 à 30 centipoises) à une température située entre 125 à 150°C.

2. Une encre thermofusible conformément à la revendication 1, dans laquelle le point de fusion du véhicule est supérieur à 50°C.

3. Une encre thermofusible conformément à la revendication 1 ou à la revendication 2 dans laquelle le véhicule est présent dans une proportion située entre 50% et 99,9% en poids.

4. Une encre thermofusible conformément à n'importe laquelle des revendications précédentes, dans laquelle le colorant est présent dans une proportion située entre 0.1% et 10% en poids.

5. Une encre thermofusible conformément à n'importe laquelle des revendications précédentes, dans laquelle le colorant est présent dans une proportion située entre 0,5 et 8% en poids.

6. Une encre thermofusible conformément à n'importe laquelle des revendications précédentes, dans laquelle le colorant est présent dans une proportion située entre 0,5 et 6% en poids.

7. Une encre thermofusible conformément à n'importe laquelle des revendications précédentes dans laquelle le véhicule se compose d'une cire solide à température ambiante, la cire solide étant sélectionnée à partir de cires de pétrole, de cires minérales, de cires d'origine végétale, de cires d'origine animale, d'hydrocarbones synthétisés, de cires hydrogénées, de cires dénaturées, d'acides gras supérieurs, d'alcools supérieurs, d'hydroxyacides stéariques, de cétone, d'amides d'acides gras, d'amines, d'esters, et de cires de polymères.

8. Une encre thermofusible conformément à la revendication 7 dans laquelle la cire solide est sélectionnée à partir de cire de paraffine, de cire microcristalline, de cire de lignite, d'ozocérite, de cérésine, de cire candellila, de cire carnauba, de cire de riz, de cire solide de hohoba, de cire d'abeille, de cire de lanoline, de cire de baleine, de cire de Fischer-Tropsch, de cire de polyéthylène, d'huile de ricin solidifiée, de dérivés d'huile de ricin solidifiée, de dérivés de cire de lignite, de dérivés de cire de paraffine, de dérivés de cire microcristalline, de dérivés de cire de polyéthylène, d'acide béhénique, d'acide stéarique, d'acide palmitique, d'acide myristique, d'acide laurique, d'alcool stéaryle, d'alcool béhényle, d'acide 1,2 hydroxystéarique, de dérivés d'acide 1,2 hydroxystéarique, de stéarine, de laurine, d'amide laurique, d'amide stéarique, d'amide oléique, d'amide cruca, d'amide ricinoléique, d'amide 1,2 hydroxystéarique, d'amide spécial gras, d'amide gras substitué N, d'amine dodécyl, d'amine tétradécyl, d'amine octadécyl, de méthyl stéarate, de stéarate octadécyl, d'ester d'acide gras de glycérine, d'ester d'acide gras de sorbitan, d'ester d'acide gras de propylène glycol, d'ester d'acide gras d'éthylène glycol, d'ester d'acide gras de polyoxyéthylène et de cire de copolymère anhydride d'acide maléique α-oléfine.

9. Une encre thermofusible conformément à la revendication 7 ou 8, dans laquelle le véhicule se compose, en outre, d'une ou de deux résines sélectionnées à partir de résines oléfiniques, de résines vinyliques, de résines acryliques, de résines phénoliques, de résines polyuréthanes, de résines polyamides, de résines polyester, de résines cétoniques, de résines alkydes, de résines de type collophane, de résines de pétrole, de résines d'acide maléique et de résines butyriques.

10. Une encre thermofusible conformément à la revendication 9, dans laquelle la résine est sélectionnée à partir de résine de polyéthylène, de résine de polypropylène, de résine de copolymère éthylène-acétate de vinyle, de résine de copolymère vinyle acétate de chlorure de vinyle, de résine d'acétate de vinyle, de résine de polymère d'acétate vinyl-éthylène chlorure de vinyle, de résine de méthacrylate, de résine de polyacrylate, de résine de copolymère d'acrylate éthylène-éthyle et de résine de copolymère d'acide éthylène-méthacrylique.

11. Une encre thermofusible conformément à la revendication 9 ou 10, dans laquelle la cire solide est utilisée comme composant principal et la résine comme additif, dans le véhicule.

12. Une encre thermofusible conformément à n'importe laquelle des revendications 7 à 11, dans laquelle la cire solide est présente dans une proportion située entre 30 et 99.9% en poids dans l'encre thermofusible.

13. Une encre thermofusible conformément à n'importe laquelle des revendications 9 à 12, dans laquelle la résine est présente dans une proportion de 50% ou inférieure en poids.

14. Une encre thermofusible conformément à n'importe laquelle des revendications précédentes, dans laquelle le colorant est un ou plusieurs pigments sélectionnés à partir de pigments inorganiques ou de pigments organiques.

15. Une encre thermofusible conformément à la revendication 14, dans laquelle le colorant est un ou plusieurs pigments sélectionnés à partir de noir de charbon, du pigment de quinacridone, du pigment de phthalocyanine et du pigment d'isoindolinone.

16. Une encre thermofusible conformément à n'importe laquelle des revendications 1 à 13, dans laquelle le colorant est une ou plusieurs teintures sélectionnées à partir de teintures solubles dans l'eau et de teintures solubles dans un solvant organique.

17. l'utilisation d'une encre thermofusible conformément à n'importe laquelle des revendications précédente dans une imprimante jet d'encre, dans laquelle l'encre est émise à partir des buses de l'imprimante jet d'encre à une température d'injection d'encre allant de 125 à 150°C.
